# EUROPEAN PATENT SPECIFICATION

(11) **EP 2 926 097 B1**
(45) Date of publication and mention of the grant of the patent: **08.02.2017**
(21) Application number: 13792295.1
(22) Date of filing: 08.11.2013
(51) Int. Cl.: G01G 9/00, G01G 19/56

(54) **A HOUSEHOLD APPLIANCE WHEREIN THE LOAD AMOUNT ON THE SHELF IS MEASURED**
HAUSHALTSVORRICHTUNG MIT MESSUNG DER BELASTUNG AUF DEM REGALBRETT
APPAREIL DOMESTIQUE DANS LEQUEL LA QUANTITÉ DE CHARGE DE L'ÉTAGÈRE EST MESURÉE

(30) Priority: 29.11.2012 TR 201213878
(43) Date of publication of application: 07.10.2015
(73) Proprietor: Arçelik Anonim Sirketi, 34950 Istanbul (TR)
(72) Inventor: AKBAS, Mustafa Omer, 34950 Istanbul (TR)
(86) International application number: PCT/EP2013/073393
(87) International publication number: WO 2014/082836

(56) References cited:
- WO-A1-2007/095755
- US-A- 5 654 508
- US-A1- 2007 000 485

## Description

The present invention relates to a household appliance wherein shelves are disposed into the body and the load amount on the shelves is measured.

In some of the household appliances, for example in ovens, refrigerators and dishwashers, shelves are used for various purposes. Whether or not the shelves are loaded and the amounts of the loads are required to be detected in a great deal of embodiments. For example, the cooking duration and the temperature is adjusted by detecting the amount of food on an oven tray in the course of the cooking duration, thereby improving cooking quality and providing energy saving. Similarly, the refrigeration performance is improved by detecting the amount of foods and beverages on a refrigerator shelf or the washing performance is improved by detecting the load on a dishwasher rack. The loads on the shelves of household appliances are generally detected by load sensors; however, the load sensors are affected especially by the hot environment inside the oven or the cold environment inside the refrigerator or the humid environment inside the dishwasher, malfunctioning in a short time period, thus measurement precision decreases and a correct load data cannot be obtained.

In the United States Patent No. US7341054, a built-in cooking appliance having a muffle that can be raised is explained. Document WO 2007/095755 discloses an apparatus for elevating the interior contents of a refrigeration unit.

The aim of the present invention is the realization of a household appliance wherein the load amount on the shelves that are disposed inside the body, can be measured precisely without using a load sensor.

The household appliance, for example the oven, refrigerator or dishwasher, realized in order to attain the aim of the present invention, explicated in the first claim and the respective claims thereof, comprises shelves disposed within its body and an elevator that moves the shelves upwards/downwards for various purposes. The elevator comprises an electric motor, a worm shaft rotated by the electric motor and a bearing connected to the shelf and moved upwards/downwards by the worm shaft.

In the household appliance of the present invention, an encoder, used widely in the conventional technique, is connected to the motor shaft or the worm shaft. The control unit calculates the kinematic quantities relating to the movement of the shelf depending on the signals received from the encoder and compares them with the kinematic quantities corresponding to certain loads prerecorded in its memory and determines the amount of load on the shelf.

In an embodiment of the present invention, the control unit moves the shelf upwards or downwards for a few seconds by means of the elevator in order to determine the load on the shelf and in the meantime calculates the movement distance of the shelf by evaluating the signals generated in the encoder and converted into digital information at the outlet of the encoder and determines the load depending on the movement distance. The duration of measuring the load on the shelf, the load measurement start and end times are determined by a timer connected to the control unit.

In an embodiment of the present invention, an energy measurement unit, for example a wattmeter, is connected to the motor and the amount of energy consumed by the motor in the course of load measurement is measured. Load measurement is performed until the energy consumed by the motor reaches a constant energy amount recorded in the memory of the control unit and the load measurement duration can change. Thus, the parameters that affect load measurement, for example the parameters like properties of the motor, the torque with respect to load, temperature, current and voltage changes do not affect load measurement, and correct and precise data is obtained under all conditions.

In another embodiment of the present invention, in the course of load measurement when the shelf is moved upwards or downwards, the motor is provided to be fed with constant current by a DC power source.

In other embodiments of the present invention, the load on the shelf is determined by calculating the speed or acceleration of the shelf by means of the control unit.

In the household appliance of the present invention, the high cost load sensor apparatuses that malfunction in a short time are not required to be used. The shelf is moved upwards or downwards a little by means of the elevator motor and the load amount on the shelf is determined precisely and correctly by evaluating the signals of the encoder, connected to the motor shaft or the worm shaft, by means of the control unit.

The household appliance realized in order to attain the aim of the present invention is illustrated in the attached figures, where:

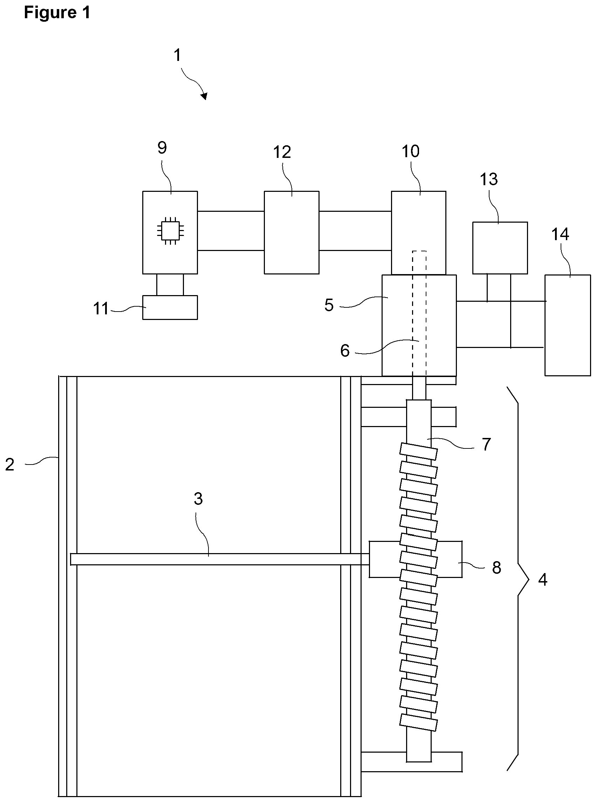

Figure 1 - is the schematic view of a household appliance, the shelves of which are moved by an elevator mechanism.
Figure 2 - is the schematic view of an oven casing whereon an elevator mechanism is disposed.

The elements illustrated in the figures are numbered as follows:
- 1.: Household appliance
- 2.: Body
- 3.: Shelf
- 4.: Elevator
- 5.: Motor
- 6.: Motor shaft
- 7.: Transmission shaft
- 8.: Bearing
- 9.: Control unit
- 10.: Encoder
- 11.: Timer
- 12.: Counter
- 13.: Energy measurement unit
- 14.: DC power source
- 15.: Casing

The household appliance (1) comprises a body (2), at least one shelf (3) disposed inside the body (2) and an elevator (4) that provides the shelf (3) to be moved upwards - downwards for various purposes. The elevator (4) comprises one or more than one electric motor (5), a motor shaft (6) that transmits rotational motion of the motor (5), a worm-type transmission shaft (7) connected to the motor shaft (6) and providing the transmission of the motion of the motor (5) to the shelf (3), and a bearing (8) connected to the shelf (3) inside the body (2) and moved downwards - upwards by the transmission shaft (7). The household appliance (1) furthermore comprises a control unit (9) that regulates the operation of the motor (5) so that the shelf (3) is positioned at the desired level inside the body (2). The control unit (9) operates the elevator (4) in accordance with commands entered from a user interface (not shown in the figures) or data received from sensors like the temperature sensor or level sensor (not shown in the figures) for bringing the shelf (3) to the desired level inside the body (2) and the motor (5) moves the bearing (8) connected to the transmission shaft (7) and hence the shelf (3) connected to the bearing (8) upwards - downwards inside the body (2).

The household appliance (1) of the present invention comprises an encoder (10) connected to the motor shaft (6) or the transmission shaft (7) and generating a certain number of pulse signals in square wave form depending on the selected measurement precision at each revolution of the motor shaft (6), and furthermore comprises the control unit (9) that determines the amount of load on the shelf (3) by calculating the kinematic quantities relating to the movement of the shelf (3) like distance, speed, acceleration, depending on the signals received from the encoder (10) during movement of the shelf (3) in the vertical direction and by comparing them with the kinematic quantities corresponding to certain loads prerecorded in its memory.

In the household appliance (1) of the present invention, the shelf (3) is enabled to be positioned at the desired level for various purposes by being moved upwards - downwards inside the body (2) by means of the elevator (4). The signals created at the encoder (10) by the rotational movement of the motor shaft (6) or the transmission shaft (7) that move the shelf (3) are evaluated by the control unit (9) in order to determine the amount of load on the shelf (3). The control unit (9) calculates the kinematic quantities of the shelf (3) like vertical movement distance, speed or acceleration depending on the signals of the encoder (10) and the amount of load on the shelf (3) is determined by comparing the calculated values with the load values recorded in the memory.

The control unit (9) provides the shelf (3) to be moved several mm., for example 1 - 10 mm., in the vertical direction for several seconds (for example 1 - 5 seconds) by means of the elevator (4) during the course of load measurement and determines the amount of load on the shelf (3) by evaluating the signals received from the encoder (10).

In an embodiment of the present invention, the household appliance (1) comprises a timer (11) that is connected to the control unit (9), that arranges the load measurement time, the start and end times where the shelf (3) is moved in order to determine the amount of load on the shelf (3) and that enables the control unit (9) to operate the motor (5) during the determined load measurement time.

The timer (11) sends signals to the control unit (9) periodically in situations the load on the shelf (3) is required to be determined, for example in accordance with the load measurement command entered from the user interface with respect to user preference or the household appliance (1) is operated for the first time or in the course of the operation of the household appliance (1) and thus determines the duration for the motor (5) to be operated (load measurement time) in order to measure the load on the shelf (3).

In an embodiment of the present invention, the household appliance (1) comprises a counter (12) that is disposed at the outlet of the encoder (10) and that converts the signals received from the encoder (10) into digital signals that the control unit (9) can evaluate.

In an embodiment of the present invention, the household appliance (1) comprises an energy measurement unit (13), for example a wattmeter, that measures the energy amount consumed by the motor (5) during the course of load measurement time and the control unit (9), having a constant energy consumption value recorded in its memory for load measurement, which enables the shelf (3) to be moved by operating the motor (5) until the energy amount measured by the energy measurement unit (13) during the measurement of the load of the shelf (3) reaches the constant energy consumption value recorded in its memory. In this embodiment, the timer (11) provides load measurement to be performed in the time period that elapses until the energy consumed by the motor (5) during the measurement of the load of the shelf (3) reaches the constant energy amount recorded in the memory of the control unit (9) instead of a predetermined time period. In this embodiment, even if the motor (5) current and voltage show variability under changing load conditions, since a constant amount of consumed energy is taken into consideration consequently, the shelf (3) load measurement data is not affected from the current and/or voltage variations. Since the power drawn by the motor (5) momentarily changes depending on the load on the shelf (3), the duration of the shelf (3) load measurement changes as well depending on the load. For example, since the motor (5) draws more power when there is a heavy load on the shelf (3), the constant energy amount recorded in the memory of the control unit (9) is reached quickly and the shelf (3) load measurement is completed in a short period of time.

In an embodiment of the present invention, the household appliance (1) comprises a DC power source (14) that provides the feeding of the motor (5) with constant current during the course of load measurement while the shelf (3) is moved upwards or downwards in order to measure the load on the shelf (3). During the course of measuring the load on the shelf (3) determined by the timer (11), the motor (5) is fed from the constant current of the DC power source (14), thus the current of the motor (5) is prevented from changing even if the torque of the motor (5) and the drawn power changes under varying load conditions and correct data relating to kinematic parameters of the shelf (3) is obtained and erroneous load measurements caused by current variation is prevented.

In an embodiment of the present invention, the control unit (9) calculates the vertical movement distance of the shelf (3) according to the signals received from the encoder (10) and determines the load on the shelf (3) depending on the movement distances corresponding to certain loads recorded in its memory.

In this embodiment, the control unit (9) calculates the movement distance of the shelf (3) depending on the number of square waves generated in the encoder (10) in the course of the load measurement duration determined by the timer (11). For example, in an elevator (4) mechanism wherein the shelf (3) is moved 5 mm upwards or downwards when the motor shaft (6) or the transmission shaft (7) completes 3 revolutions and an encoder (10) that generates 256 pulse signals in one revolution is used, the counter (12) counts 768 signals. The 768 signal data corresponds to 5 mm vertical movement of the shelf (3) in the memory of the control unit (9) and the load corresponding to this distance is determined. Precision in measurement of the shelf (3) load is maintained by selecting an encoder (10) with a higher signal/revolution rate (for example 1024 signal/revolution) with respect to the desired measurement precision.

In the embodiment of the present invention, the distance measured in the vertical movement of the shelf (3) is inversely proportional with the load in case the shelf (3) is moved upwards. It is determined that the load increases as the distance decreases. The vertical distance measured in the vertical movement of the shelf (3) is directly proportional with the load in the case the shelf (3) is moved downwards. It is determined that the load increases as the distance increases.

In an embodiment of the present invention, the control unit (9) calculates the vertical movement speed of the shelf (3) according to the signals received from the encoder (10) and determines the load on the shelf (3) depending on the speeds corresponding to certain loads recorded in its memory.

In this embodiment, the control unit (9) calculates the speed of the shelf (3) depending on the frequency of square waves generated in the encoder (10) in the course of the load measurement time determined by the timer (11).

In another embodiment of the present invention, the control unit (9) calculates the vertical movement acceleration of the shelf (3) according to the signals received from the encoder (10) and determines the load on the shelf (3) depending on the acceleration values corresponding to certain loads recorded in its memory.

In this embodiment, the control unit (9) calculates the acceleration of the shelf (3) depending on the frequency change of the square waves generated in the encoder (10) in the course of the load measurement time determined by the timer (11).

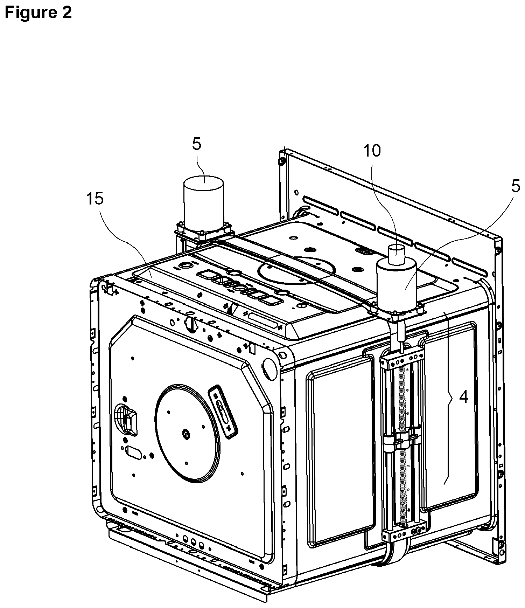

In another embodiment of the present invention, the household appliance (1) is an oven comprising an oven cavity situated inside the body (2) and a casing (15) surrounding the oven cavity (Figure 2). The elevator (4) is disposed outside the casing (15), thereby the motor (5) and the encoder (10) are not affected from high temperatures in the oven cavity. The shelves (3) (trays) inside the oven are moved downwards/upwards by means of the elevator (4) and positioned at the most suitable level with respect to the amount of food to be cooked. The amount of food on the shelf (3) is determined by means of the encoder (10) connected to the motor (5) of the elevator (4) that is outside the casing (15), without using a load sensor etc. inside the oven cavity. The elevator (4), the encoder (10) and the control unit (9), that provides measurement of the load, are not affected by high temperatures inside the oven cavity and are prevented from malfunctioning.

In another embodiment of the present invention, the household appliance (1) is a refrigerator.

In another embodiment of the present invention, the household appliance (1) is a dishwasher.

In the household appliance (1) of the present invention, the shelf (3) is moved upwards or downwards a little by means of the motor (5) and the load on the shelf (3) is determined by the control unit (9) evaluating the signals of the encoder (10) connected to the motor shaft (6) or the transmission shaft (7). In order to measure the shelf (3) load, a low cost encoder (10) is used which is utilized widely for speed control of electric motors in the conventional technique. It is not required to use high cost load sensor mechanisms that malfunction easily. The load on the shelf (3) is determined precisely and correctly and the household appliance (1) is provided to be operated in accordance with the load on the shelf (3).

It is to be understood that the present invention is not limited by the embodiments disclosed above and a person skilled in the art can easily introduce different embodiments. These should be considered within the scope of the protection postulated by the claims of the present invention.

## Claims

1. A household appliance (1) comprising a body (2), at least one shelf (3) disposed inside the body (2) and an elevator (4) that provides the shelf (3) to be moved upwards - downwards for various purposes and having an electric motor (5), a motor shaft (6) that transmits rotational motion of the motor (5), a worm-type transmission shaft (7) connected to the motor shaft (6) and providing the transmission of the motion of the motor (5) to the shelf (3) and a bearing (8), connected to the shelf (3) inside the body (2) and moved downwards - upwards by the transmission shaft (7), **characterized in that** an encoder (10) connected to the motor shaft (6) or the transmission shaft (7) and generating pulse signals at each revolution of the motor shaft (6) and **in that** the control unit (9) that calculates the distance, speed or acceleration relating to the movement of the shelf (3) during movement of the shelf (3) in the vertical direction, depending on the signals received from the encoder (10) and that determines the amount of load on the shelf (3) by comparing them with the distance, speed or acceleration corresponding to certain loads prerecorded in its memory.

2. A household appliance (1) as in Claim 1, **characterized in that** the control unit (9) that provides the shelf (3) to be moved upwards or downwards several mm. in the vertical direction by means of the elevator (4) for load measurement duration of several seconds in order to determine the amount of load on the shelf (3).

3. A household appliance (1) as in Claim 1 or 2, **characterized in that** a timer (11) connected to the control unit (9), determining the load measurement time when the shelf (3) is moved and enabling the control unit (9) to operate the motor (5) in the course of the determined load measurement time.

4. A household appliance (1) as in any one of the above claims, **characterized in that** a counter (12) disposed at the outlet of the encoder (10) and converting the signals received from the encoder (10) into digital signals that the control unit (9) can evaluate.

5. A household appliance (1) as in any one of the above claims, **characterized in that** an energy measurement unit (13) that measures the energy amount consumed by the motor (5) in the course of load measurement duration and **in that** the control unit (9), having a constant energy consumption value recorded in its memory, enabling the shelf (3) to be moved by operating the motor (5) until the energy amount measured by the energy measurement unit (13) reaches the constant energy consumption value recorded in its memory.

6. A household appliance (1) as in any one of the above claims, **characterized in that** a DC power source (14) that provides the feeding of the motor (5) with constant current in the course of load measurement time when the shelf (3) is moved upwards or downwards.

7. A household appliance (1) as in any one of the above claims, **characterized in that** the control unit (9) that calculates the vertical movement distance of the shelf (3) according to the signals received from the encoder (10) and that determines the load on the shelf (3) depending on the distance.

8. A household appliance (1) as in Claim 7, **characterized in that** the control unit (9) that calculates the movement distance of the shelf (3) depending on the number of signals generated in the encoder (10) in the course of load measurement time determined by the timer (11).

9. A household appliance (1) as in any one of the Claims 1 to 6 **characterized in that** the control unit (9) that calculates the vertical movement speed of the shelf (3) according to the signals received from the encoder (10) and determines the load on the shelf (3) depending on the speed.

10. A household appliance (1) as in Claim 9, **characterized in that** the control unit (9) that calculates the speed of the shelf (3) depending on the frequency of signals generated in the encoder (10) in the course of load measurement time determined by the timer (11).

11. A household appliance (1) as in any one of the Claims 1 to 6 **characterized in that** the control unit (9) that calculates the vertical movement acceleration of the shelf (3) according to the signals received from the encoder (10) and determines the load on the shelf (3) depending on the acceleration.

12. A household appliance (1) as in Claim 11, **characterized in that** the control unit (9) that calculates the acceleration of the shelf (3) depending on the frequency change of signals generated in the encoder (10) in the course of load measurement time determined by the timer (11).

13. A household appliance (1) as in any one of the above claims, which is an oven comprising an oven cavity wherein the cooking process is performed, a casing (15) surrounding the oven cavity and an elevator (4) disposed outside of the casing (15).

14. A household appliance (1) as in any one of the Claims 1 to 12, which is a refrigerator.

15. A household appliance (1) as in any one of the Claims 1 to 12, which is a dishwasher.

## Patentansprüche

1. Haushaltsgerät (1), umfassend einen Gehäusekörper (2), wenigstens ein Regal (3), das im Inneren des Gehäusekörper (2) angeordnet ist, und eine Hebevorrichtung (4), die es ermöglicht, das Regal (3) zu verschiedenen Zwecken auf/ab zu bewegen, und aufweisend einen Elektromotor (5), eine Motorwelle (6), die die Drehbewegung des Motors (5) überträgt, eine Getriebewelle (7) des Schneckentyps, die mit der Motorwelle (6) verbunden ist und das Übertragen der Bewegung des Motors (5) auf das Regal (3) ermöglicht, und ein Lager (8), das mit dem Regal (3) im Inneren des Gehäusekörpers (2) verbunden ist und von der Getriebewelle (7) auf/ab bewegt wird, **dadurch gekennzeichnet, dass** ein Drehgeber (10) mit der Motorwelle (6) oder der Getriebewelle (7) verbunden ist und bei jeder Umdrehung der Motorwelle (6) Impulssignale erzeugt, und dass die Steuereinheit (9) die Strecke, Geschwindigkeit oder Beschleunigung bezüglich der Bewegung des Regals (3) während der Bewegung des Regals (3) in der vertikalen Richtung abhängig von den vom Drehgeber (10) empfangenen Signalen berechnet und die Belastung des Regals (3) bestimmt, indem sie sie mit der Strecke, Geschwindigkeit oder Beschleunigung vergleicht, die bestimmten Lasten entspricht, die in ihrem Speicher im Voraus abgelegt wurden.

2. Haushaltsgerät (1) nach Anspruch 1, **dadurch gekennzeichnet, dass** die Steuereinheit (9) es ermöglicht, dass das Regal (3) für eine Lastmessdauer von mehreren Sekunden mithilfe der Hebevorrichtung (4) um mehrere mm in der vertikalen Richtung auf- oder abwärts bewegt wird, um die Belastung des Regals (3) zu bestimmen.

3. Haushaltsgerät (1) nach Anspruch 1 oder 2, **dadurch gekennzeichnet, dass** ein Timer (11) mit der Steuereinheit (9) verbunden ist, der die Lastmesszeit bestimmt, wenn das Regal (3) bewegt wird, und es der Steuereinheit (9) gestattet, den Motor (5) im Verlauf der bestimmten Lastmesszeit zu betreiben.

4. Haushaltsgerät (1) nach einem der vorangehenden Ansprüche, **dadurch gekennzeichnet, dass** ein Zähler (12) am Ausgang des Drehgebers (10) angeordnet ist, der die vom Drehgeber (10) empfangenen Signale in Digitalsignale umwandelt, die die Steuereinheit (9) auswerten kann.

5. Haushaltsgerät (1) nach einem der vorangehenden Ansprüche, **dadurch gekennzeichnet, dass** eine Energiemesseinheit (13) die vom Motor (5) im Verlauf der Lastmessdauer verbrauchte Energie misst und **dass** die Steuereinheit (9), in deren Speicher ein konstanter Energieverbrauchswert abgelegt ist, es dem Regal (3) gestattet, durch Betreiben des Motors (5) bewegt zu werden, bis die von der Energiemesseinheit (13) gemessene Energiemenge den in ihrem Speicher abgelegten konstanten Energieverbrauchswert erreicht.

6. Haushaltsgerät (1) nach einem der vorangehenden Ansprüche, **dadurch gekennzeichnet, dass** eine Gleichstromquelle (14) das Versorgen des Motors (5) im Verlauf der Lastmesszeit, wenn das Regal (3) auf- oder abwärts bewegt wird, mit einem konstanten Strom ermöglicht.

7. Haushaltsgerät (1) nach einem der vorangehenden Ansprüche, **dadurch gekennzeichnet, dass** die Steuereinheit (9) die vertikale Bewegungsstrecke des Regals (3) gemäß den vom Drehgeber (10) empfangenen Signalen berechnet und die Belastung des Regals (3) abhängig von der Strecke bestimmt.

8. Haushaltsgerät (1) nach Anspruch 7, **dadurch gekennzeichnet, dass** die Steuereinheit (9) die Bewegungsstrecke des Regals (3) abhängig von der Anzahl Signale berechnet, die im Drehgeber (10) im Verlauf der Lastmesszeit erzeugt wird, die vom Timer (11) bestimmt wurde.

9. Haushaltsgerät (1) nach einem der Ansprüche 1 bis 6, **dadurch gekennzeichnet, dass** die Steuereinheit (9) die vertikale Bewegungsgeschwindigkeit des Regals (3) gemäß den vom Drehgeber (10) empfangenen Signalen berechnet und die Belastung des Regals (3) abhängig von der Geschwindigkeit bestimmt.

10. Haushaltsgerät (1) nach Anspruch 9, **dadurch gekennzeichnet, dass** die Steuereinheit (9) die Bewegungsstrecke des Regals (3) abhängig von der Anzahl Signale berechnet, die im Drehgeber (10) im Verlauf der Lastmesszeit erzeugt wird, die vom Timer (11) bestimmt wurde.

11. Haushaltsgerät (1) nach einem der Ansprüche 1 bis 6, **dadurch gekennzeichnet, dass** die Steuereinheit (9) die vertikale Bewegungsgeschwindigkeit des Regals (3) gemäß den vom Drehgeber (10) empfangenen Signalen berechnet und die Belastung des Regals (3) abhängig von der Geschwindigkeit bestimmt.

12. Haushaltsgerät (1) nach Anspruch 11, **dadurch gekennzeichnet, dass** die Steuereinheit (9) die Bewegungsstrecke des Regals (3) abhängig von der Anzahl Signale berechnet, die im Drehgeber (10) im Verlauf der Lastmesszeit erzeugt wird, die vom Timer (11) bestimmt wurde.

13. Haushaltsgerät (1) nach einem der vorangehenden Ansprüche, das ein Ofen ist, umfassend einen Ofenhohlraum, in dem der Garungsvorgang durchgeführt wird, eine Verkleidung (15), die den Ofenhohlraum umgibt, und eine Hebevorrichtung (4), die außerhalb der Verkleidung (15) angeordnet ist.

14. Haushaltsgerät (1) nach einem der Ansprüche 1 bis 12, das ein Kühlschrank ist.

15. Haushaltsgerät (1) nach einem der Ansprüche 1 bis 12, das ein Geschirrspüler ist.

## Revendications

1. Un électroménager (1) comprenant un corps (2), au moins une étagère (3) qui est disposée dans le corps (2) et un ascenseur (4) qui permet à l'étagère (3) d'être déplacée vers le haut - vers le bas pour diverses fins et qui présente un moteur électrique (5), un arbre de moteur (6) transmettant le mouvement de rotation du moteur (5), un arbre de transmission à vis sans fin (7) relié à l'arbre de moteur (6) et permettant la transmission du mouvement du moteur (5) à l'étagère (3) et un palier (8) qui est relié à l'étagère (3) dans le corps (2) et qui est déplacé vers le bas - vers le haut par l'arbre de transmission (7), **caractérisé en ce qu**'un encodeur (10) est relié à l'arbre de moteur (6) ou à l'arbre de transmission (7) et génère des signaux impulsionnels à chaque tour de l'arbre de moteur (6) et **en ce que** l'unité de commande (9) calcule la distance, la vitesse ou l'accélération relatives au mouvement de l'étagère (3) lors du mouvement de l'étagère (3) dans la direction verticale, en fonction des signaux reçus de l'encodeur (10) et détermine la quantité de charge sur l'étagère (3) en comparant eux avec la distance, la vitesse ou l'accélération relatives à des certaines charges préenregistrées dans sa mémoire.

2. Un électroménager (1) selon la Revendication 1, **caractérisé en ce que** l'unité de commande (9) permet à l'étagère (3) d'être déplacé vers le haut ou vers le bas de plusieurs millimètres dans la direction verticale par l'intermédiaire de l'ascenseur (4) pour une durée de mesure de charge de plusieurs secondes afin de déterminer la quantité de charge sur l'étagère (3).

3. Un électroménager (1) selon la Revendication 1 ou 2, **caractérisé en ce qu**'un compteur horaire (11) est relié à l'unité de commande (9), détermine la durée de mesure de charge lorsque l'étagère (3) est déplacé et permet à l'unité de commande (9) de faire fonctionner le moteur (5) au cours de la durée déterminée de mesure de charge.

4. Un électroménager (1) selon l'une quelconque des revendications précédentes, **caractérisé en ce qu'**un compteur (12) est disposé à la sortie de l'encodeur (10) et convertit les signaux reçus de l'encodeur (10) en signaux numériques que l'unité de commande (9) peut évaluer.

5. Un électroménager (1) selon l'une quelconque des revendications précédentes, **caractérisé en ce qu**'une unité de mesure d'énergie (13) mesure la quantité d'énergie consommée par le moteur (5) au cours de la durée de mesure de charge et en ce que l'unité de commande (9), présentant une valeur constante de consommation d'énergie enregistrée dans sa mémoire, permet à l'étagère (3) d'être déplacé en faisant fonctionner le moteur (5) jusqu'à ce que la quantité d'énergie mesurée par l'unité de mesure d'énergie (13) atteigne la valeur constante de consommation d'énergie enregistrée dans sa mémoire.

6. Un électroménager (1) selon l'une quelconque des revendications précédentes, **caractérisé en ce qu**'une source d'alimentation CC (14) assure l'alimentation du moteur (5) avec le courant constant au cours de la durée de mesure de charge lorsque l'étagère (3) est déplacée vers le haut ou vers le bas.

7. Un électroménager (1) selon l'une quelconque des revendications précédentes, **caractérisé en ce que** l'unit de commande (9) calcule la distance de déplacement vertical de l'étagère (3) en fonction des signaux reçus de l'encodeur (10) et détermine la charge sur l'étagère (3) en fonction de la distance.

8. Un électroménager (1) selon la Revendication 7, **caractérisé en ce que** l'unit de commande (9) calcule la distance de déplacement de l'étagère (3) en fonction du nombre de signaux générés dans l'encodeur (10) au cours de la durée de mesure de charge par le compteur horaire (11).

9. Un électroménager (1) selon l'une quelconque des revendications de 1 à 6, **caractérisé en ce que** l'unit de commande (9) calcule la vitesse de déplacement vertical de l'étagère (3) en fonction des signaux reçus de l'encodeur (10) et détermine la charge sur l'étagère (3) en fonction de la vitesse.

10. Un électroménager (1) selon la Revendication 9, **caractérisé en ce que** l'unit de commande (9) calcule la vitesse de l'étagère (3) en fonction de la fréquence des signaux générés dans l'encodeur (10) au cours de la durée de mesure de charge par le compteur horaire (11).

11. Un électroménager (1) selon l'une quelconque des revendications de 1 à 6, **caractérisé en ce que** l'unit de commande (9) calcule l'accélération de déplacement vertical de l'étagère (3) en fonction des signaux reçus de l'encodeur (10) et détermine la charge sur l'étagère (3) en fonction de l'accélération.

12. Un électroménager (1) selon la Revendication 11, **caractérisé en ce que** l'unit de commande (9) calcule l'accélération de l'étagère (3) en fonction de la variation de la fréquence des signaux générés dans l'encodeur (10) au cours de la durée de mesure de charge par le compteur horaire (11).

13. Un électroménager (1) selon l'une quelconque des revendications précédentes, qui est un four comprenant une chambre de cuisson dans laquelle le processus de cuisson est réalisé, une enveloppe (15) qui entoure la chambre de cuisson et un ascenseur (4) qui est disposé à l'extérieur de l'enveloppe (15).

14. Un électroménager (1) selon l'une quelconque des revendications de 1 à 12, qui est un réfrigérateur.

15. Un électroménager (1) selon l'une quelconque des revendications de 1 à 12, qui est un lave-vaisselle.
